# FASCICULE DE BREVET EUROPEEN

(11) **EP 2 283 629 B1**
(45) Date de publication et mention de la délivrance du brevet: **26.03.2014**
(21) Numéro de dépôt: 09715823.2
(22) Date de dépôt: 12.02.2009
(51) Int. Cl.: H04L 29/06

(54) **PROCEDE DE GESTION DANS LES EQUIPEMENTS DE SECURITE ET ENTITE DE SECURITE**
VERWALTUNGSVERFAHREN IN SICHERHEITSEINRICHTUNGEN UND SICHERHEITSVORRICHTUNG
METHOD OF MANAGEMENT IN SECURITY EQUIPMENT AND SECURITY ENTITY

(30) Priorité: 26.02.2008 FR 0801037
(43) Date de publication de la demande: 16.02.2011
(73) Titulaire: THALES, 92200 Neuilly-sur-Seine (FR)
(72) Inventeur: MAXIMILIEN, Benoit, 78150 Le Chesnay (FR); KSINANT, Vladimir, 92130 Issy Les Moulineaux (FR)
(74) Mandataire: Dudouit, Isabelle
(86) Numéro de dépôt international: PCT/EP2009/051643
(87) Numéro de publication internationale: WO 2009/106432

(56) Documents cités:
- WO-A-00/78004
- WO-A-2007/069245

## Description

L'invention concerne un procédé et une entité utilisés notamment dans le domaine de la sécurité des systèmes d'information. Elle s'applique, par exemple, dans le domaine de la gestion des équipements de sécurité qui sont placés en coupure de flux d'informations au sein d'un réseau.

Actuellement, à la connaissance du Demandeur, pour assurer la sécurité lors d'échanges de données ou d'informations entre équipements au sein d'un réseau, il est connu d'utiliser des centres de gestion et de sécurité spécifiques. Ceci engendre une charge importante pour les opérateurs, tels que les banques ou tout autre opérateur travaillant dans le domaine de la sécurité des systèmes d'information (SSI). Cette charge est d'autant plus importante que le nombre d'équipements à gérer est grand. Il existe donc un besoin de trouver une solution de « gestion transparente » permettant de rationaliser les moyens à la fois humains et matériels.

Différentes applications connues de l'art antérieur nécessitent un centre de gestion pour:
- les équipements cryptographiques qui sont placés en coupure matérielle dans un réseau dit sensible, comme les chiffreurs haut débit, les chiffreurs d'artère de sécurité (en particulier Ethernet), des chiffreurs individuels,
- les équipements de filtrage qui sont placés en coupure matérielle dans un réseau sensible, par exemple, les pare-feux,
- les logiciels de sécurité installés sur les terminaux et les serveurs manipulant l'information : les pare-feux logiciels, les logiciels de chiffrement, les logiciels anti-virus, les logiciels d'authentification des utilisateurs, etc.

Dans la suite de la description, l'abréviation ES désigne des Entités de sécurité qui regroupent l'ensemble des équipements et produits cités ci-dessus.

En matière de sécurité dans l'échange de l'information ou de données et des systèmes d'information, il est primordial de gérer des entités de sécurité. En effet, un certain nombre de services est nécessaire pour l'administration des équipements cryptographiques qu'ils soient civils ou de défense. Bien qu'il y ait une spécificité dans les réseaux sensibles, du fait des protocoles utilisés, des protections particulières, des algorithmes utilisés, ou encore du niveau de sécurité recherché, le même type de gestion est souvent retrouvé :
- la gestion de la politique des sécurités : autrement dit, l'établissement des associations de sécurité ou SA ou encore la constitution de communautés ou la création de réseaux privés virtuels connus sous l'abréviation anglo-saxonne VPNs qui revient à déterminer qui peut dialoguer avec qui, comment gérer les clés; c'est ce que l'on peut appeler « les droits »,
- la gestion de la supervision, c'est-à-dire la remontée d'informations venant des entités : alarmes, événements, connexions ou logs, la base commune d'information ou la base d'information de gestion connue sous l'abréviation anglo-saxonne « MIB » pour le monde IP (Internet Protocol), la gestion de configuration, la gestion des faits techniques, et des incidents, etc.; c'est ce que l'on peut appeler « le reporting »,
- l'administration de produits de sécurité qui assure l'intégralité du réseau et de la confiance (garantie apportée par les certificats, des infrastructures de clé publique ou « PKI », des annuaires,..); c'est ce qui est appelée « l'autorité ».

La figure 1 schématise les 3 blocs intégrés précités qui constituent dans le module de gestion: les droits, le reporting, et l'autorité.

La figure 2 est un schéma décrivant une unité centrale de gestion ES en liaison avec plusieurs équipements ESᵢ, ESⱼ, les différents équipements pouvant communiquer entre eux.

L'un des problèmes posés par l'art antérieur est que chaque équipement peut avoir sa propre politique de sécurité et utiliser des éléments propriétaires en terme d'interfaces, de protocoles d'algorithmes, d'utilisations et de contextes d'emploi. Ces spécificités empêchent ou gênent l'interopérabilité entre les équipements et leur mutualisation. Or, tous les acteurs du domaine précité SSI cherchent actuellement à rationaliser les moyens tant humains que matériels.

Par ailleurs, le système centralisé connu de l'art antérieur constitue un frein sérieux à la mise en place de fonctions de sécurité dans des environnements réseaux très évolutifs comme les réseaux radios ad hoc, c'est-à-dire des réseaux dans lesquels les noeuds et équipements sont mobiles. Bien que les problèmes réseaux soient aujourd'hui largement en cours de résolution, l'utilisation d'une gestion centralisée de la sécurité dans de tels environnements va à l'encontre de l'objectif de flexibilité et de décentralisation.

La suite de la description fait appel à des appellations connues de l'Homme du métier pour désigner différents équipements utilisés dans le système et le procédé selon l'invention.

Ainsi, le terme confiance désigne la détermination par une ES de son futur comportement vis à vis d'une autre ES. Cette confiance peut se bâtir sur la base de preuves fortes comme l'existence d'un secret partagé entre les ES. Ce ou ces secrets peuvent être des clés, des mots de passe, un algorithme cryptographique ou toute autre donnée confidentielle. En l'absence de preuves fortes, la confiance peut également se fonder sur :
- le comportement passé des ES en question,
- le degré de menace auquel sont soumis les ES.

Une plate-forme de confiance, expression connue dans le domaine de sécurité, est un dispositif matériel, tel qu'un processeur, un circuit programmable de type FPGA (Field Programmable Gate Array), un circuit intégré spécifique plus connu sous l'abréviation anglo-saxonne « ASIC » et un logiciel dans lesquels les experts sécurité ont confiance, c'est-à-dire qu'ils ont :
o la maîtrise complète des composants et des cartes électroniques (circuit imprimé, routage), des mécanismes de protection des ES (étiquettes holographiques, boîtier résistant aux rayonnements électromagnétiques),
○ l'absence de porte dérobée, plus connue sous le terme anglo-saxon « Back door » qui présente le risque de laisser passer en clair, non chiffrées, des informations considérées comme sensibles sans passer par le module de chiffrement,
○ la maîtrise des codes et l'absence d'erreurs dans l'exécution de programmes ou « bug » (test de couverture, règle de codage, analyse de code).

La plupart des éléments cités ci-dessus sont connus de l'Homme du métier travaillant dans le domaine de la sécurité et ne seront pas détaillés.

Souvent une plate-forme de confiance est placée en coupure et non en ressource afin de garantir un haut niveau de sécurité et être le passage obligé de tous les messages inter domaine, entre le domaine sensible A et le domaine libre non sensible B.

Le mot « vote » se rapporte à un mécanisme de dialogue entre entités dans lequel une entité demande à d'autres leurs avis dans le but de prendre une décision collégiale. La décision est ensuite notifiée à l'ensemble des entités concernées. Le vote se base donc sur un mécanisme réseau de question/réponses/notifications de décision connus de l'Homme du métier. Le mot « parrain » correspond à l'entité par l'intermédiaire de laquelle est décidée l'adhésion d'un nouvel arrivant (ou filleul) au sein d'une communauté. Le parrain a également pour mission de transmettre au filleul tous les éléments de configuration qui lui permettront de communiquer au sein de la communauté.

Le document WO 2000/78004 décrit un procédé de gestion de plusieurs entités de sécurité ESi logicielles ou matérielles placées en coupure de flux d'information au sein d'un réseau existant dans lequel plusieurs entités de sécurité Esi communiquent entre elles. Le document présente un système de gestion de politique unifiée pour une organisation incluant un serveur de politique central et des entités de sécruité Esi logicielles ou matérielles placées en coupure de flux d'information placées à distance. L'un des objectifs de la présente invention est de fournir des entités capables de s'auto-gérer entre elles sans avoir à en référer à une instance supérieure. Cette gestion automatique implique que la confiance lors des échanges d'information entre les membres du réseau existe et qu'elle se propage de façon dynamique et décentralisée. Le procédé et le système selon l'invention reposent notamment sur la mise en oeuvre simultanée de certaines règles :
la surveillance d'une entité par les autres entités, la propagation des informations à travers le réseau formé par plusieurs entités. Pour cela, le système met, par exemple, en oeuvre les règles suivantes : des règles d'adoption d'une entité au sein d'un réseau constitué de plusieurs entités communiquant entre elles, des règles de communication entre ces entités et des règles d'exclusion ou d'intégration d'une entité.

L'invention concerne un procédé de gestion de plusieurs entités de sécurité ESi logicielles ou matérielles placées en coupure de flux d'information au sein d'un réseau existant dans lequel plusieurs entités de sécurité ESi communiquent entre elles caractérisé en ce qu'il comporte au moins les étapes suivantes :
➢ désigner une entité jouant le rôle de parrain pour une nouvelle entité ou filleul souhaitant joindre le réseau,
➢ ledit filleul contacte ledit parrain et sur réception de la demande de connexion dudit filleul, ledit parrain détermine s'il accepte ou non la connexion,
➢ si le parrain accepte la connexion dudit filleul, alors le parrain se connecte audit filleul et se déconnecte des autres équipements ES formant le réseau,
➢ au moins une des entités et/ou le parrain vérifie le niveau de sécurité dudit filleul,
   ○ si le parrain ou au moins une des entités décide de faire confiance audit filleul, alors, le parrain transmet au filleul des informations de configuration adaptées à lui permettre d'entrer en communication avec les autres entités du réseau,
   ○ si le parrain ou au moins une des entités décide de ne pas faire confiance au filleul, alors ce dernier ne peut accéder au réseau et une alarme est générée vers les autres entités du réseau.

Le procédé comporte une étape d'accès du filleul au réseau après l'étape d'initialisation comprenant les étapes suivantes : si le filleul est accepté par les entités qu'il a contacté, les carnets d'adresse des entités contactées sont mis à jour avec les données du filleul, et le filleul communique alors librement avec les entités qu'il a contactées.

Chaque entité surveille, par exemple, le comportement des entités qui font partie de son carnet d'adresses en utilisant des règles de communication fixées.

Une entité détectant une anomalie de fonctionnement ou un comportement anormal de la part d'une autre entité avertit par exemple toutes les entités du réseau de cette anomalie.

Toutes les entités averties se préviennent alors mutuellement de leur avis respectifs sur la décision d'exclusion et selon la nature des messages reçus et selon un algorithme, les entités décident au choix :
○ d'exclure l'entité qui a été dénoncée, ladite entité dénoncée étant exclue de tous les carnets d'adresse,
○ de ne rien faire,
○ d'exclure l'entité qui a dénoncée, cette dernière étant ensuite exclue de tous les carnets d'adresse.

L'invention concerne aussi une entité de sécurité logicielle ou matérielle placée en position de coupure des flux d'informations au sein d'un réseau comprenant plusieurs entités ES communicant entre elles, caractérisée en ce qu'elle comporte au moins les éléments suivants :
- un moyen de connexion d'une entité à un équipement à protéger, ledit moyen étant adapté à exécuter les étapes du procédé précitées,
- ledit moyen est en liaison avec un multiplexeur, qui reçoit d'une part des commandes issues d'un dispositif de commande permettant le changement de mode de fonctionnement des équipements,
- Le multiplexeur a une entrée pour les données protégées provenant du port entrée/sortie, une entrée, pour les données issues du port utilisé pour la phase d'initialisation, une entrée recevant les commandes, une sortie, transmettant les données vers une plate-forme de confiance,
- La plate-forme de confiance possède une sortie qui est connectée à un port de sortie vers un réseau non protégé.

Ledit moyen de connexion comprend fonctionnellement (le moyen peut être implémenté soit de façon matérielle ou de façon logicielle) :
- un port d'entrée/sortie standard connecté à un réseau ou une station ou un logiciel à protéger,
- un port de contact ou entrée ayant pour fonction de permettre d'exécuter la phase d'initialisation mise en oeuvre par le procédé précité.

Ledit moyen de connexion comprend par exemple deux modules logiciels, un des deux modules étant adapté à exécuter la phase d'initialisation mise en oeuvre par le procédé précité.

La plateforme de confiance peut comporter un module de génération d'aléa et/ou un module de mémorisation.

Ledit moyen de connexion comprend un module logiciel adapté à exécuter la phase d'initialisation d'un filleul dans un réseau en exécutant les étapes du procédé précité et un module logiciel adapté à gérer les entrées/sorties entre une entité et un réseau.

D'autres caractéristiques et avantages du dispositif selon l'invention apparaîtront mieux à la lecture de la description qui suit d'un exemple de réalisation donné à titre illustratif et nullement limitatif annexé des figures qui représentent :

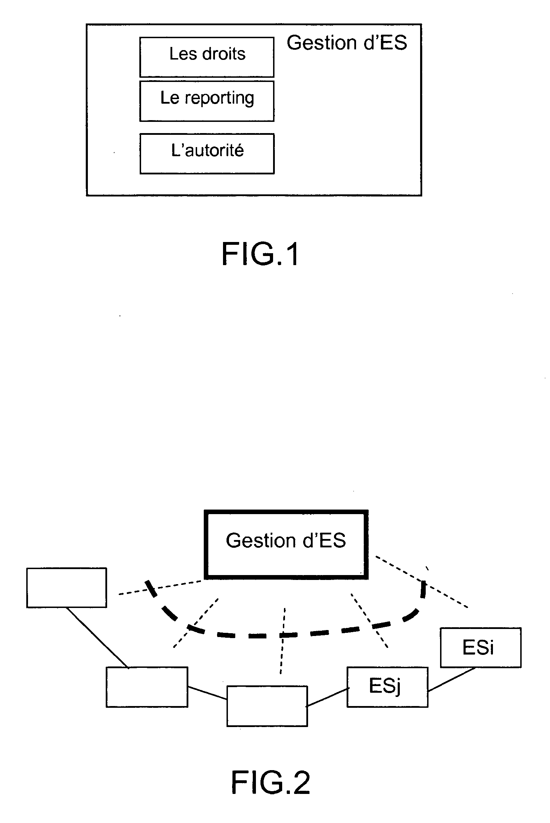

- Les figures 1 et 2, des schémas de fonctionnement d'un système avec une gestion centralisée selon l'art antérieur,

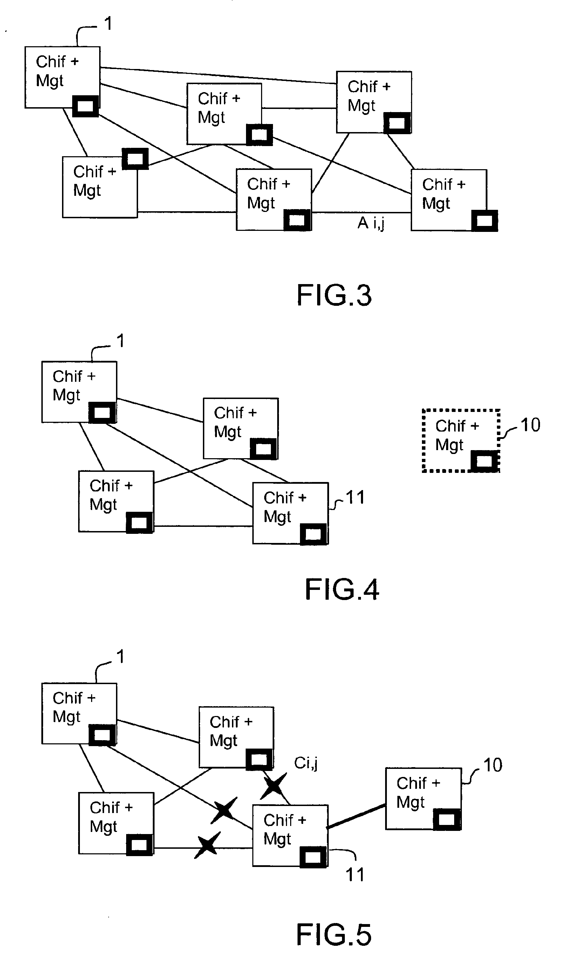

- La figure 3, un schéma d'un système de gestion décentralisé selon l'invention,
- La figure 4, les étapes mises en oeuvre lors de l'initialisation du système,
- La figure 5, les étapes exécutées lors de la phase d'accès d'un équipement au système,

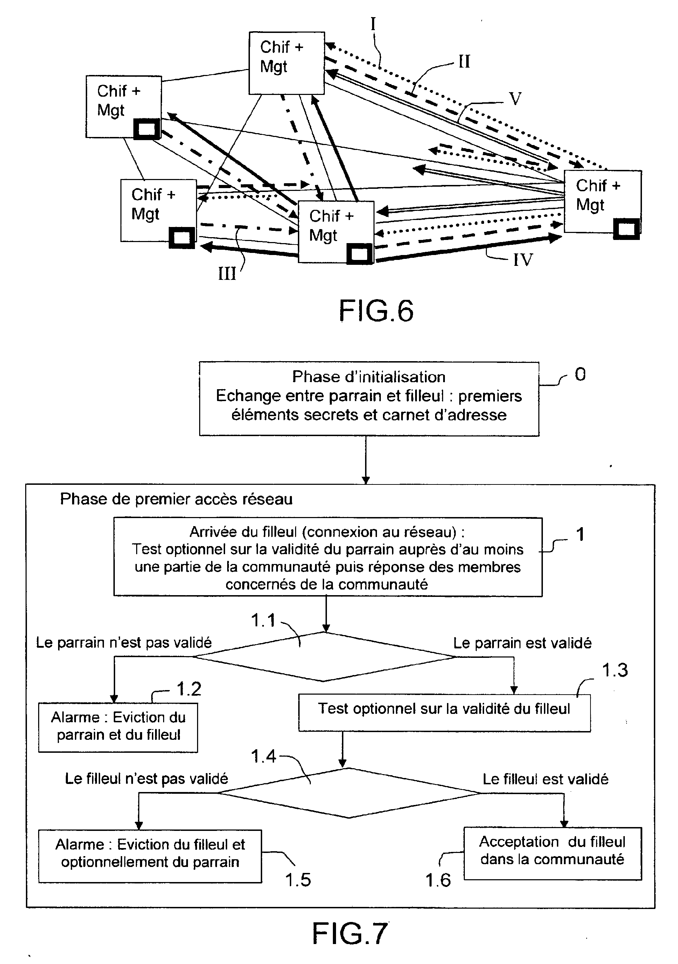

- La figure 6, exemple de communication suite au premier accès réseau système d'une nouvelle entité,
- La figure 7, l'organigramme correspondant à la phase de premier accès au réseau,

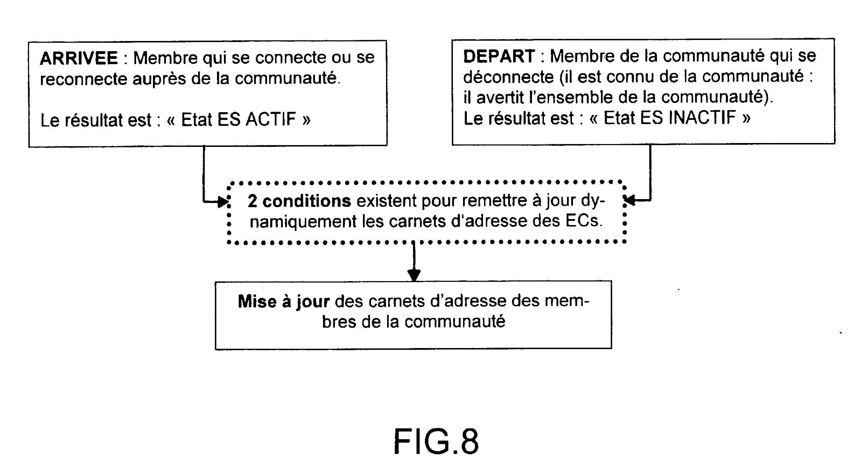

- La figure 8, un exemple d'organigramme de reporting et de communication permettant la mise à jour dynamique des carnets d'adresses des différentes entités d'une communauté,

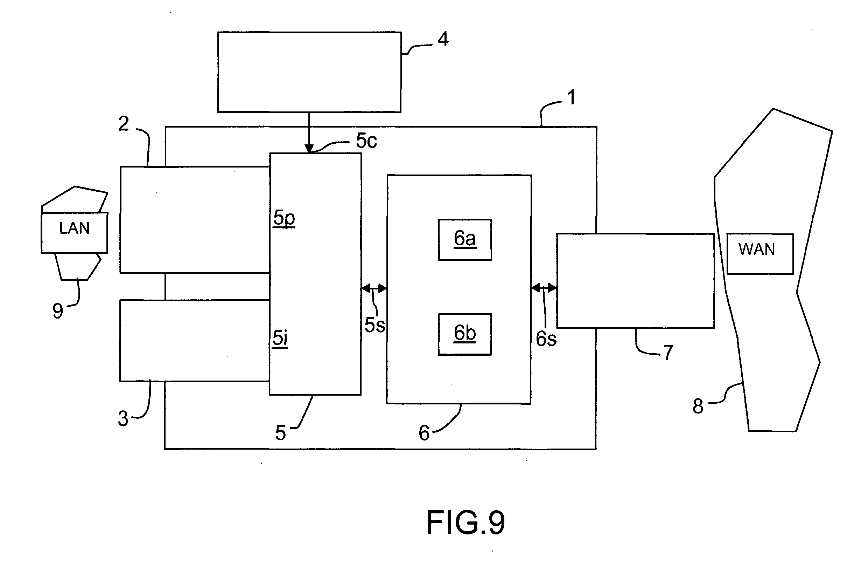

- La figure 9, un exemple détaillé d'une structure d'équipement cryptograhique de haut niveau de sécurité selon l'invention, et

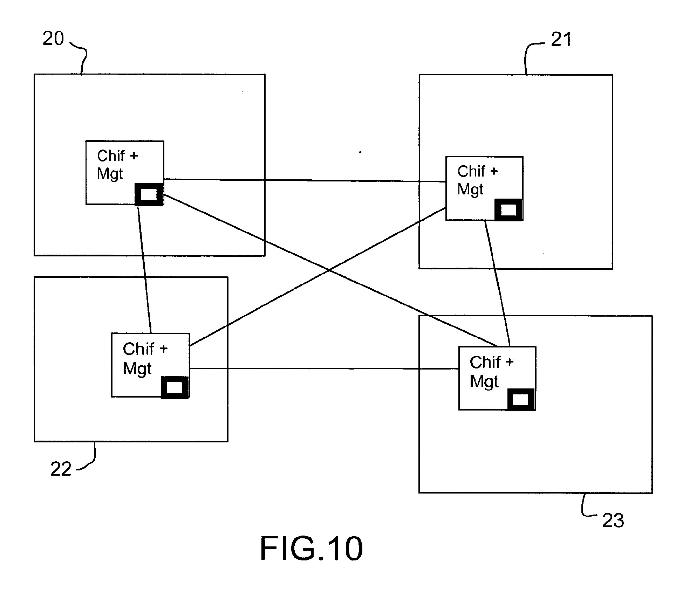

- La figure 10, un exemple de mise en oeuvre du procédé selon l'invention qui montre l'intérêt du procédé pour des applications multiples notamment dans le cas de petite topologie réseau.

Afin de mieux faire comprendre le procédé et le système de gestion décentralisé selon l'invention, l'exemple qui suit est donné dans le cadre d'un réseau comprenant plusieurs entités.

### Structure interne d'une ES

Dans cet exemple, une entité ES peut correspondre à un équipement cryptographique 1 conforme au schéma détaillé de la figure 9.

Un équipement 1 faisant partie du système a notamment pour but de protéger un réseau local privé (LAN) d'un réseau longue distance partagé (WAN). L'équipement 1 comporte un port 2 d'entrée/sortie standard connecté au réseau local et un port 3 dédié à la phase d'initialisation. Ces deux ports peuvent se présenter selon la réalisation selon différentes formes, qui prennent en compte notamment le degré de sécurité recherché par un utilisateur. Dans l'exemple développé à titre non limitatif pour mieux comprendre le fonctionnement et les spécificités du procédé selon l'invention, les deux ports sont présentés comme des éléments physiquement séparés et remplissant chacun une fonction. Dans d'autres exemples, l'équipement aura un seul port physique permettant les échanges de données et le port comportera au moins un module logiciel ayant pour fonction d'exécuter la phase d'initialisation du procédé décrite ci-après et un module logiciel dédié à la gestion des entrées/sorties standards entre l'équipement ES et le réseau local.

Un dispositif de commande 4 permet de sélectionner le mode de fonctionnement du multiplexage entre : le mode d'initialisation (mode 1 utilisant le port 3) et un mode communicant (mode 2 utilisant le port 2).

Les deux ports 2 et 3 sont en liaison avec un multiplexeur 5 (par exemple, un dispositif « OU » exclusif) qui reçoit des commandes issues d'un dispositif de commande 4. Ce dispositif de commande 4 a notamment pour fonction de gérer le changement de mode de fonctionnement des équipements. Par exemple, le mode 1 concerne la phase initialisation réseau lorsqu'un nouvel équipement veut rejoindre le système constitué de plusieurs équipements, le mode 2 concerne la phase d'accès au réseau, c'est-à-dire la phase qui commence une fois que l'équipement est accepté par les autres équipements du réseau.

Le multiplexeur 5 a une entrée-sortie 5p pour les données protégées provenant du port réseau entrée/sortie 2 (côté LAN), une entrée-sortie 5i pour les données issues du port 3 utilisé pour la phase d'initialisation (port de Contact dédié aux nouvelles entités, autrement dit l'accès exclusif aux filleuls), une entrée 5c recevant les commandes, une entrée-sortie 5s, transmettant les données vers une plate-forme de confiance 6.

Une plate-forme de confiance 6 est dans le cadre de la présente invention un dispositif comprenant notamment un moyen de génération d'aléa 6a et un module de mémorisation 6b des éléments secrets. Ces derniers peuvent être des clés, de paramètres de configuration réseau, des paramètres de communautés ou des paramètres d'équipement.

La plate-forme de confiance 6 possède une entrée-sortie 6s qui est connectée à un port 7 vers un réseau de communication étendu connu sous l'abréviation anglo-saxonne « WAN » 8 pour Wide Area Network. L'équipement cryptographique est positionné en coupure entre le réseau à protéger 9 et le réseau WAN 8.

### Un réseau opérationnel avec un management ARD

La figure 3 schématise un réseau comportant plusieurs équipements cryptographiques ESi ayant une structure interne semblable à celle décrite à la figure 9 communiquant entre eux via des liaisons de communication Aij.

Le procédé selon l'invention exécute différentes étapes détaillées ci-après qui comportent notamment :
➢ L'entrée d'un nouvel équipement dans un réseau en cours de fonctionnement normal,
➢ La surveillance des différentes entités présentes au sein du réseau, du parrain et du filleul ou nouvel arrivant,
➢ L'avertissement en cas de dysfonctionnement des entités,
➢ L'acceptation du nouvel arrivant et ce qui en découle.

### Arrivée d'une nouvelle ES suivant deux étapes ;

### première étape : l'initialisation

La figure 4 représente les étapes mises en oeuvre au cours de la phase d'initialisation ou première étape d'un nouvel arrivant voulant se connecter aux réseau. Cette phase correspond à une entrée d'un nouvel équipement dans le réseau par exemple de la figure 3, ce réseau étant déjà opérationnel. Un nouvel équipement 10 veut se connecter au système composé de plusieurs équipements 5i communiquant déjà entre eux par des artères de communication Aij. Pour cela un des équipements 11 va jouer le rôle de parrain. Tous les équipements ont la capacité de devenir le parrain d'un nouvel équipement. Pour cela les équipements ES possèdent par exemple un logiciel adapté à exécuter les différentes du procédé selon l'invention comprenant notamment la première étape d'initialisation et la deuxième étape de l'accès système pour le nouvel arrivant.

L'équipement 11 ayant un rôle de parrain, va interrompre son dialogue avec les autres équipements ESi grâce au multiplexeur 5 mis en évidence grâce à sa structure interne (cf figure 9). C'est la phase dite d'initialisation. L'équipement 10 qui souhaite se connecter au réseau échange des informations avec l'équipement parrain 11. La première connexion du nouvel arrivant 10 sur l'entrée réservée 5i ou port contact du parrain 11 entraîne la déconnexion des autres entrées sorties de l'équipement parrain (figure 5), à savoir les ports 5p, 6s. Cette déconnexion est représentée sur la figure par les lettres Cij. Cette phase est considérée comme très sensible et elle peut dans certains cas correspondre à l'échange des premiers secrets entre le parrain 11 et le nouvel arrivant 10. Le parrain 11 va recevoir des données de la part du nouvel arrivant 10 et vérifier, par exemple, la configuration du nouvel arrivant. Cette configuration comporte, par exemple, les éléments suivants :
- des paramètres liés aux capacités réseaux du nouvel arrivant tels que, par exemple, le nombre d'interfaces réseaux, les éventuelles limitations de débit, les protocoles de routage supportés,
- la liste des applications supportées par le nouvel arrivant,
- des paramètres liés aux applications supportées par le nouvel arrivant, par exemple, les types de codage voix pour une application de phonie, les ports TCP ou UDP utilisés pour l'application,
- des paramètres liés aux fonctions de sécurité du nouvel arrivant :
   ○ la définition des politiques de sécurité supportées,
   ○ les algorithmes de chiffrements supportés ainsi que la taille des clés, des compteurs antirejeu et la crypto-période.

Par exemple, le parrain vérifie si le nouvel arrivant est compatible :
- des applications utilisées dans le système,
- du niveau de sécurité visé dans le système.

Le parrain 11 peut aussi contrôler l'historique des communications déjà effectuées par le nouvel arrivant ou filleul 10, par exemple : avec qui le nouvel arrivant a-t-il déjà communiqué ?, a-t-il déjà été le parrain d'autres entités ?, a-t-il récemment subi des changements de configuration ?. Ces contrôles sont effectués au moyen d'un logiciel contenu dans les entités ES. Si le parrain 11 décide de faire confiance au filleul 10, alors le parrain 11 transmet au filleul 10 des informations qui lui permettront d'entrer en communication avec le reste du système. Ces informations peuvent être des clés, la définition fine des politiques de sécurité en vigueur dans le système, le carnet d'adresses, les paramètres de sécurité de la communauté, ou tout autre élément nécessaire à l'autonomie communicante du filleul avec la communauté.

Dans le cas des équipements cryptographiques précités, chaque équipement est adapté pour générer un secret grâce au composant plate-forme de confiance 6 qui contient le générateur d'aléa 6a. Dans ce modèle, par exemple, un équipement cryptographique est une autorité de confiance compétente pour créer et distribuer des clés. Cette phase est critique et nécessite une forte relation de confiance entre 2 équipements. Cette phase comporte l'exécution d'un algorithme de chiffrement spécifique et /ou une authentification forte afin d'utiliser l'ES dans ce mode bien particulier : cela peut passer par des mécanismes tels que le mot de passe, le bouchon CIK (Crypto Ignition Key), un algorithme d'échanges cryptographiques réservé pour cet échange, etc....

### Arrivée d'une nouvelle ES suivant 2 étapes ; deuxième étape : l'accès système

Puis après cette phase d'initialisation, le nouvel équipement 10 s'insère dans le système, c'est l'étape décrite aux figures 5 et 6. Cette phase d'insertion réseau se déroule en trois étapes, la procédure étant donnée à titre indicatif car elle dépend du niveau de sécurité recherché :
1. Optionnellement, vérification par le filleul de la validité du parrain étape 1.1: cette étape permet de valider et mesurer la confiance du parrain dans le système (flèche I). L'ES entrant envoie une consultation de vote à l'ensemble des ES de chaque communauté du carnet d'adresses reçu du parrain (ou éventuellement à un sous-ensemble des ES listés dans le carnet d'adresse reçu du parrain). Cette consultation est aussi envoyée au parrain. Si un vote négatif (flèche II) est issu du sondage, alors le nouveau venu envoie une alarme à l'ensemble de la communauté. Le processus s'arrête ici étape 1.2.
2. si le parrain est validé, le procédé teste la validité du filleul : cette étape 1.3 (optionnelle) permet de valider et de mesurer la confiance du filleul (flèche III). Tous les équipements constituant le réseau sont consultés et avertissent le parrain s'ils valident ou non l'arrivée du nouvel entrant. Selon la nature des messages reçus (par exemple, suivant le vote négatif à la majorité des membres de la communauté), le parrain peut décider d'invalider l'entrée du nouveau venu étape 1.4. Il envoie alors une alarme (étape 1.5) à l'ensemble de la communauté ou tout du moins à la partie de communauté concernée (flèche IV). S'il n'y a pas de problème (étape 1.6), alors le parrain envoie un acquittement à la partie concernée de la communauté pour les avertir de sa décision. Le filleul est également prévenu et il peut alors (si nécessaire) faire parvenir à la partie concernée de la communauté les informations qui leur permettront ensuite de communiquer entre eux, par exemple, de nouvelles clés, de nouveaux paramètres, etc... (flèche V).
3. Un traitement des alarmes peut être mis en place suivant deux cas de figure :
   - soit l'alarme n'est pas envoyée à l'ensemble de la communauté car tous les équipements ES qui ont été sondés ont répondu (état de l'ES « actif ») ou bien sont déconnectés après avertissement (état de l'équipement ES « inactif ») : cf les règles de reporting.
   - soit l'alarme est générée et envoyée à toute la communauté car il y a bien un problème (Un ES sondé a été déconnecté sans avertissement auprès de la communauté, ou bien le parrain ou le filleul ne sont pas de confiance).

L'ES filleul 11 est pleinement accueilli dans le système. Les membres concernés de la communauté l'ajoutent dans leurs carnets d'adresses respectifs.

### Exemple d'un processus d'accès réseau d'une nouvelle ES (organigramme)

La figure 7 représente l'organigramme déroulant les étapes précitées qui constitue la synthèse de la règle d'adoption d'un nouvel équipement dans un réseau.

Une fois intégré dans sa communauté, c'est-à-dire l'ensemble des équipements cryptographiques constituant initialement un réseau, l'équipement filleul devient autonome.

Les étapes se déroulant selon le procédé sont les suivantes :
Etape 0 : phase d'initialisation qui met en oeuvre un échange entre le parrain et le filleul : par exemple l'échange des premiers éléments secrets et du carnet d'adresses,
Etape 1 : arrivée du filleul qui correspond à la connexion au réseau. Elle met en oeuvre un test optionnel sur la validité du parrain auprès d'au moins une partie de la communauté, puis elle comprend la réponse des membres concernés de la communauté ;

### Etape 1.1 : le parrain est-il validé ?

Non , alors Etape 1.2 : le parrain est évincé et le système émet une alarme vers tous les participants au réseau pour éliminer le parrain et le filleul,
Oui, alors Etape 1.3 : test optionnel sur la validité du filleul
Etape 1.4 : le filleul n'est pas validé, alors le système transmet un signal d'éviction du filleul et éventuellement du parrain
Etape 1.5 : le filleul est validé, alors il y a acceptation du filleul dans la communauté.

### Les régles de communication : définition d'un comportement ES envers la communauté

Tout ES doit respecter les paramètres de la communauté définis lors de l'initialisation (le parrain indique ainsi un comportement réseau et de sécurité au filleul : respect des renouvellements de clés, respect des crypto périodes, respect des règles de reporting, etc....). Il doit également surveiller le comportement des autres membres de la communauté avec lesquels il communique et envoyer des alarmes à la communauté en cas de soupçon envers un membre de la communauté. Cependant, la dénonciation peut être perçue comme une attaque réseau et le dénonciateur s'expose à une condamnation si sa dénonciation n'est pas fondée.

Autrement dit, les équipements cryptographiques constituant le système communiquent librement au sein de la communauté. Si un équipement cryptographique constate qu'un autre équipement ne respecte pas les règles de la communauté alors il prévient les autres, et il peut en demander l'exclusion prenant le risque de sa propre exclusion.

### Règles de reporting (suite des Règles de communication) :

La figure 8 représente un exemple de règles de reporting mis en oeuvre par le procédé selon l'invention.

Quand un équipement se connecte ou se déconnecte du réseau, il doit obéir aux deux règles suivantes :
○ Si l'équipement vient de se connecter ou se reconnecter au réseau, alors l'état de l'équipement cryptographique est « actif »,
○ Si l'équipement quitte le réseau, alors l'état de l'équipement est « inactif ».

A chaque fois, un équipement cryptographique prévient sa communauté. Ceci peut en effet être primordial pour le cas de traitement des alarmes en cas d'accès réseau d'un nouvel équipement ou d'un sondage.

Cette indication « actif/inactif » est entrée dans les tables « carnet d'adresses/communauté de chaque équipement ».

### Comportement général des ES d'une communauté

Les équipements d'une communauté sont égaux entre eux, ce qui signifie qu'ils ont les mêmes fonctionnalités :
■ Election : ils peuvent et doivent répondre aux sondages et aux consultations de nouveaux venus.
■ Justice : tous les ES peuvent dénoncer un autre ES ou émettre un vote négatif ou envoyer une alarme dans la communauté, initialiser et introduire un filleul (c'est-à-dire devenir parrain).
■ Lois : Tous les ES peuvent et doivent respecter les paramètres de la communauté (règle de dénonciation, crypto période , compteurs anti rejeu non respectés ; etc....)

### Exclusion d'un ES

Le processus d'exclusion est le suivant :
Optionnellement, l'ES ayant détecté l'anomalie prévient un tout ou un sous ensemble des membres de la communauté. Tous les ES consultés se préviennent alors mutuellement de leur avis respectifs sur la décision d'exclusion. Selon la nature des messages reçus et selon un algorithme non spécifique à l'invention, les ES peuvent alors décider au choix :
   ➢ d'exclure l'ES qui a été dénoncé
   ➢ de ne rien faire
   ➢ d'exclure l'ES qui a dénoncé.

Si un ES est exclu, l'ensemble de la communauté est alors averti de l'exclusion. Les ES de la communauté retirent alors le membre exclu de leurs carnets d'adresses.

Le procédé et le système de gestion décentralisé dans un domaine de sécurité des réseaux présentent notamment les avantages suivants : des gestions homogènes des différents équipements constituant le système, non spécifiques et une gestion plus simple, une augmentation de la sécurité car tous les équipements formant le réseau se surveillent et se contrôlent les uns les autres, une possibilité de réseau évolutif plus facilement que dans le cas d'un réseau à gestion centralisée.

Le procédé présente un intérêt pour des applications multiples notamment dans le cas de petite topologie réseau. Le procédé selon l'invention offre notamment la possibilité de gérer de petites topologies réseaux mêlant à la fois des équipements fixes d'infrastructure ou des unités mobiles. Elle est aussi très adaptée aux grosses topologies réseaux puisqu'elle permet de se soustraire d'un management centralisé qui est la source de la vulnérabilité des systèmes.

La figure 10 est un exemple de mise en oeuvre de l'invention pour un réseau ad hoc dans lequel les équipements peuvent varier et de petite taille. Les équipements de chiffrement selon l'invention sont intégrés, par exemple à un premier groupe de fantassins 20, un poste de commandement 21 permet de gérer les manoeuvres à effectuer. Le système comprend aussi des véhicules d'intervention 23 et un deuxième groupe de fantassins. Chaque équipement est équipé d'une entité de sécurité selon l'invention. Les différents équipements communiquent entre eux et peuvent mettre en oeuvre les étapes du procédé selon l'invention détaillées ci-avant.

## Revendications

1. Procédé de gestion de plusieurs entités de sécurité ESi logicielles ou matérielles placées en coupure de flux d'information au sein d'un réseau existant dans lequel plusieurs entités de sécurité ESi communiquent entre elles **caractérisé en ce qu'**il comporte au moins les étapes suivantes :
➢ désigner une entité jouant le rôle de parrain (11) pour une nouvelle entité (10) ou filleul souhaitant joindre le réseau,
➢ ledit filleul (10) contacte ledit parrain (11) et sur réception de la demande de connexion dudit filleul (10), ledit parrain (11) détermine s'il accepte ou non la connexion,
➢ si le parrain accepte la connexion dudit filleul (10), alors le parrain (11) se connecte audit filleul et se déconnecte des autres équipements ES formant le réseau,
➢ au moins une des entités et/ou le parrain vérifie le niveau de sécurité dudit filleul,
○ si le parrain (11) ou au moins une des entités décide de faire confiance audit filleul (10), alors, le parrain transmet au filleul (10) des informations de configuration adaptées à lui permettre d'entrer en communication avec les autres entités du réseau,
○ si le parrain (11) ou au moins une des entités décide de ne pas faire confiance au filleul (10), alors ce dernier ne peut accéder au réseau et une alarme est générée vers les autres entités du réseau.

2. Procédé selon la revendication 1 **caractérisé en ce qu'**il comporte une étape d'accès du filleul (10) au réseau après l'étape d'initialisation comprenant les étapes suivantes : si le filleul (10) est accepté par les entités qu'il a contacté, les carnets d'adresse des entités contactées sont mis à jour avec les données du filleul (10), et le filleul (10) communique alors librement avec les entités qu'il a contactées.

3. Procédé selon l'une des revendications 1 ou 2 **caractérisé en ce que** chaque entité surveille le comportement des entités qui font partie de son carnet d'adresses en utilisant des règles de communication fixées.

4. Procédé selon l'une des revendications 1 à 3 **caractérisé en ce qu'**une entité détectant une anomalie de fonctionnement ou un comportement anormal de la part d'une autre entité avertit toutes les entités du réseau de cette anomalie.

5. Procédé selon la revendication 4 **caractérisé en ce que** toutes les entités averties se préviennent alors mutuellement de leur avis respectifs sur la décision d'exclusion et selon la nature des messages reçus et selon un algorithme, les entités décident au choix :
○ d'exclure l'entité qui a été dénoncée, ladite entité dénoncée étant exclue de tous les carnets d'adresse,
○ de ne rien faire,
○ d'exclure l'entité qui a dénoncée, cette dernière étant ensuite exclue de tous les carnets d'adresse.

6. Entité de sécurité logicielle ou matérielle placée en position de coupure des flux d'informations au sein d'un réseau comprenant plusieurs entités ES communicant entre elles, **caractérisée en ce qu'**elle comporte au moins les éléments suivants :
• un moyen (2, 3) de connexion entrée/sortie d'une entité à un équipement (9) à protéger, ledit moyen (2, 3) étant adapté à exécuter les étapes de la phase d'initialisation du procédé selon la revendication 1,
• ledit moyen (2, 3) est en liaison avec un multiplexeur (5), qui reçoit part des commandes issues d'un dispositif de commande (4) permettant le changement de mode de fonctionnement de l' équipement,
• le multiplexeur a une entrée (5p) pour les données protégées provenant du moyen de connexion entrée/sortie (2), une entrée (5i), pour les données issues du moyen de connexion (3) utilisé pour la phase d'initialisation, une entrée (5c) recevant les commandes, une sortie (5s), transmettant les données vers une plate-forme de confiance (6),
• la-plate-forme de confiance possède une sortie (6s) qui est connectée à un port de sortie (8) vers un réseau non protégé.

7. Entité de sécurité logicielle ou matérielle selon la revendication 6 **caractérisé en ce que** ledit moyen de connexion (2, 3) comprend fonctionnellement :
• un port (2) d'entrée/sortie standard connecté à un réseau ou une station (9) ou un logiciel à protéger,
• un port (3) de contact ou entrée ayant pour fonction de permettre d'exécuter la phase d'initialisation mise en oeuvre par le procédé selon la revendication 1.

8. Entité de sécurité selon la revendication 7 caractérisée en que ledit moyen de connexion comprend deux modules logiciels, un des deux modules étant adapté à exécuter la phase d'initialisation mise en oeuvre par le procédé selon la revendication 1.

9. Entité de sécurité selon la revendication 6 **caractérisée en ce que** la plateforme de confiance (6) comporte un module de génération d'aléa (6a) et/ou un module de mémorisation (6b).

10. Entité de sécurité selon la revendication 6 **caractérisée en ce que** ledit moyen de connexion (2, 3) comprend un module logiciel adapté à exécuter la phase d'initialisation d'un filleul dans un réseau en exécutant les étapes selon la revendication 1 et un module logiciel adapté à gérer les entrées/sorties entre une entité et un réseau.

## Patentansprüche

1. Verfahren zum Verwalten mehrerer Software- oder Hardware-Sicherheitseinheiten ESi, die zum Stoppen von Informationsfluss in einem existierenden Netzwerk positioniert sind, in dem mehrere Sicherheitseinheiten ESi miteinander kommunizieren, **dadurch gekennzeichnet, dass** es wenigstens die folgenden Schritte beinhaltet:
➢ Bestimmen einer Einheit, um als Sponsor (11) für eine neue Einheit (10) oder gesponsorte Partei zu fungieren, die sich dem Netzwerk anschließen möchte;
➢ die gesponsorte Partei (10) kontaktiert den Sponsor (11) und der Sponsor (11) bestimmt, nach dem Erhalt der Zuschaltungsanforderung von der gesponsorten Partei (10), ob er die Zuschaltung akzeptiert oder nicht;
➢ der Sponsor (11) verbindet sich, wenn er das Zuschalten der gesponsorten Partei (10) akzeptiert, mit der gesponsorten Partei und schaltet sich von anderen das Netzwerk bildenden Geräten ES ab;
➢ wenigstens eine der Einheiten und/oder der Sponsor prüft/prüfen das Sicherheitsniveau der gesponsorten Partei,
wenn der Sponsor (11) oder wenigstens eine der Einheiten beschließt, der gesponsorten Partei (10) zu vertrauen, dann sendet der Sponsor Konfigurationsinformationen zu der gesponsorten Partei (10), die dazu konfiguriert sind, ihr zu erlauben, mit den anderen Einheiten des Netzwerks zu kommunizieren,
wenn der Sponsor (11) oder wenigstens eine der Einheiten beschließt, der gesponsorten Partei (10) nicht zu vertrauen, dann kann diese nicht auf das Netzwerk zugreifen und es wird ein Alarm bei den anderen Einheiten des Netzwerks erzeugt.

2. Verfahren nach Anspruch 1, **dadurch gekennzeichnet, dass** es einen Schritt des Zugreifens durch die gesponsorte Partei (10) auf das Netzwerk nach dem Initialisierungsschritt beinhaltet, der die folgenden Schritte beinhaltet: Aktualisieren, wenn die gesponsorte Partei (10) von den von ihr kontaktierten Einheiten akzeptiert wird, der Adressbücher der kontaktierten Einheiten mit den Daten der gesponsorten Partei (10), wobei die gesponsorte Partei (10) dann frei mit den von ihr kontaktierten Einheiten kommunizieren kann.

3. Verfahren nach Anspruch 1 oder 2, **dadurch gekennzeichnet, dass** jede Einheit das Verhalten der zu ihrem Adressbuch gehörenden Einheiten anhand von festgelegten Kommunikationsregeln überwacht.

4. Verfahren nach einem der Ansprüche 1 bis 3, **dadurch gekennzeichnet, dass** eine Einheit, die eine Betriebsanomalie oder ein anormales Verhalten seitens einer anderen Einheit erkennt, alle Einheiten des Netzwerks über diese Anomalie informiert.

5. Verfahren nach Anspruch 4, **dadurch gekennzeichnet, dass** alle benachrichtigten Einheiten dann einander ihre jeweilige Meinung über die Ausschlussentscheidung mitteilen und, je nach Art der empfangenen Nachrichten und gemäß einem Algorithmus, die Einheiten eine Entscheidung auf der Basis der folgenden Optionen treffen:
○ Ausschließen der gemeldeten Einheit, wobei die gemeldete Einheit aus allen Adressbüchern ausgeschlossen wird;
○ nichts tun;
○ Ausschließen der Einheit, die die Meldung vorgelegt hat, wobei die Letztere dann aus allen Adressbüchern ausgeschlossen wird.

6. Software- oder Hardware-Sicherheitseinheit, die zum Stoppen von Informationsflüssen in einem Netzwerk positioniert ist, das mehrere miteinander kommunizierende Einheiten ES umfasst, **dadurch gekennzeichnet, dass** sie wenigstens die folgenden Elemente umfasst:
• ein Mittel (2, 3) zum Verbinden eines Ein-/Ausgangs einer Einheit mit einem zu schützenden Gerät (9), wobei das Mittel (2, 3) zum Ausführen der Schritte der Initialisierungsphase des Verfahrens nach Anspruch 1 ausgelegt ist;
• das Mittel (2, 3) ist mit einem Multiplexer (5) verbunden, der einen Teil der von einer Steuervorrichtung (4) kommenden Befehle empfängt, so dass die Betriebsart des Gerätes gewechselt werden kann;
• der Multiplexer hat einen Eingang (5p) für die von dem Ein-/Ausgangs-Verbindungsmittel (2) kommenden geschützten Daten, einen Eingang (5i) für die von dem Verbindungsmittel (3) kommenden Daten für die Initialisierungsphase, einen Eingang (5c), der Befehle empfängt, einen Ausgang (5s) zum Senden der Daten zu einer vertrauenswürdigen Plattform (6);
• die vertrauenswürdige Plattform hat einen Ausgang (6s), der mit einem Ausgangsport (8) zu einem ungeschützten Netz verbunden ist.

7. Software- oder Hardware-Sicherheitseinheit nach Anspruch 6, **dadurch gekennzeichnet, dass** das Verbindungsmittel (2, 3) betriebsmäßig Folgendes umfasst:
• einen standardmäßigen Ein-/Ausgangsport (2), der mit einem Netzwerk oder einer Station (9) oder einer zu schützenden Software verbunden ist;
• einen Kontakt- oder Eingangsport (3) zum Zulassen der Ausführung der Initialisierungsphase, die von dem Verfahren nach Anspruch 1 implementiert wird.

8. Sicherheitseinheit nach Anspruch 7, **dadurch gekennzeichnet, dass** das Verbindungsmittel zwei Softwaremodule umfasst, wobei eines der beiden Softwaremodule zum Ausführen der von dem Verfahren nach Anspruch 1 implementierten Initialisierungsphase ausgelegt ist.

9. Sicherheitseinheit nach Anspruch 6, **dadurch gekennzeichnet, dass** die vertrauenswürdige Plattform (6) ein Zufallsgenerationsmodul (6a) und/oder ein Speichermodul (6b) umfasst.

10. Sicherheitseinheit nach Anspruch 6, **dadurch gekennzeichnet, dass** das Verbindungsmittel (2, 3) ein Softwaremodul zum Ausführen der Initialisierungsphase einer gesponsorten Partei in einem Netz durch Ausführen der Schritte nach Anspruch 1 und ein Softwaremodul zum Verwalten der Eingänge/Ausgänge zwischen einer Einheit und einem Netzwerk umfasst.

## Claims

1. A method for managing a plurality of software or hardware security entities ESi positioned to cut off an information stream within an existing network in which a plurality of security entities ESi communicate with each other, **characterised in that** it comprises at least the following steps:
➢ designating an entity to act as a sponsor (11) for a new entity (10) or sponsored party wishing to join the network;
➢ said sponsored party (10) contacts said sponsor (11) and, upon receipt of the connection request from said sponsored party (10), said sponsor (11) determines whether or not to accept the connection;
➢ if said sponsor accepts the connection of said sponsored party (10) then said sponsor (11) connects to said sponsored party and disconnects from the other equipment ES forming the network;
➢ at least one of the entities and/or the sponsor verifies the security level of said sponsored party,
○ if said sponsor (11) or at least one of the entities decides to trust said sponsored party (10) then said sponsor transmits to said sponsored party (10) some configuration information that is designed to allow it to communicate with the other entities of the network,
○ if said sponsor (11) or at least one of the entities decides that they will not trust said sponsored party (10) then said sponsored party cannot access the network and an alarm is generated to the other entities of the network.

2. The method according to claim 1, **characterised in that** it comprises a step of allowing said sponsored party (10) access to the network after the step of initialising, which comprises the following steps: if said sponsored party (10) is accepted by the entities that they contacted, then the address books of the contacted entities are updated with the data of said sponsored party (10), and said sponsored party (10) then freely communicates with the entities that they have contacted.

3. The method according to claim 1 or 2, **characterised in that** each entity monitors the behaviour of the entities that belong to their address book by using fixed communication rules.

4. The method according to any one of claims 1 to 3, **characterised in that** an entity that detects an operating anomaly or abnormal behaviour in another entity notifies all of the entities of the network of this anomaly.

5. The method according to claim 4, **characterised in that** all of the notified entities then mutually provide their respective opinion with regard to an exclusion decision and, according to the type of messages received and according to an algorithm, the entities make a decision based on the following choices:
○ excluding the reported entity, said reported entity being excluded from all of the address books;
○ doing nothing;
○ excluding the entity that submitted the report, said entity then being excluded from all of the address books.

6. A software or hardware security entity positioned to cut off information streams within a network comprising a plurality of entities ES communicating with each other, **characterised in that** it comprises at least the following elements:
• means (2, 3) for connecting an input/output of an entity to an item of equipment (9) to be protected, said means (2, 3) being designed to execute the steps of the initialisation phase of the method according to claim 1;
• said means (2, 3) is connected to a multiplexer (5) that receives part of the commands coming from a control device (4) allowing the operating mode of the equipment to be changed;
• said multiplexer has an input (5p) for the protected data originating from the input/output connection means (2), an input (5i) for the data coming from said connection means (3) used for the initialisation phase, an input (5c) receiving the commands, an output (5s) transmitting the data to a trusted platform (6);
• said trusted platform has an output (6s) that is connected to an output port (8) to an unprotected network.

7. The software or hardware security entity according to claim 6, **characterised in that** said connection means (2, 3) operationally comprises:
• a standard input/output port (2) connected to a network or a station (9) or software to be protected;
• a contact or input port (3) designed to allow the execution of the initialisation phase implemented by the method according to claim 1.

8. The security entity according to claim 7, **characterised in that** said connection means comprises two software modules, with one of the two modules being designed to execute the initialisation phase implemented by the method according to claim 1.

9. The security entity according to claim 6, **characterised in that** said trusted platform (6) comprises a random generation module (6a) and/or a storage module (6b).

10. The security entity according to claim 6, **characterised in that** said connection means (2, 3) comprises a software module designed to execute the initialisation phase of a sponsored party in a network by executing the steps according to claim 1 and a software module designed to manage the inputs/outputs between an entity and a network.
